# EUROPÄISCHE PATENTSCHRIFT

(11) **EP 3 919 416 B1**
(45) Veröffentlichungstag und Bekanntmachung des Hinweises auf die Patenterteilung: **09.08.2023**
(21) Anmeldenummer: 20178030.1
(22) Anmeldetag: 03.06.2020
(51) Int. Cl.: B07B 1/40, B07B 1/46, B65G 11/08, B07B 1/00, B65G 11/20, B65G 27/04, B65G 27/34

(54) **VORRICHTUNG ZUR ÜBERGABE VON PRODUKTEN**
DEVICE FOR TRANSFER OF PRODUCTS
DISPOSITIF DE TRANSFERT DE PRODUITS

(43) Veröffentlichungstag der Anmeldung: 08.12.2021
(73) Patentinhaber: Uhlmann Pac-Systeme GmbH & Co. KG, 88471 Laupheim (DE)
(72) Erfinder: Karrer, David, 88471 Laupheim (DE)
(74) Vertreter: Wächter, Jochen

(56) Entgegenhaltungen:
- CN-A- 110 252 640
- CN-U- 203 936 018
- CN-U- 204 817 185
- KR-B1- 102 035 837
- US-A- 196 779
- US-A- 610 458

## Beschreibung

Die vorliegende Erfindung betrifft eine Vorrichtung zur Übergabe von Produkten, insbesondere pharmazeutischen Produkten, wie Tabletten, Kapseln, Dragees oder Oblongs.

Pharmazeutische Verpackungsprozesse erfordern ein hohes Maß an Prozesssicherheit. Es ist unter anderem zu gewährleisten, dass ausschließlich valide medizinische Produkte in dafür vorgesehene Blisterverpackungen, Flaschen oder anderweitige mit einem Verschluss versehene Behälter, die aus Kunststoff, Metall oder Glas hergestellt sein können, abgefüllt werden. Vor der Abfüllung der medizinischen Produkte ist beispielsweise sicherzustellen, dass die medizinischen Produkte von Produktbruch getrennt werden. Produktbruch umfasst in diesem Zusammenhang auch Produktstaub oder Abrieb. Hierfür können beispielsweise Vorrichtungen zum Einsatz kommen, die Produktbruch zunächst detektieren, der anschließend mechanisch abgetrennt wird. Alternativ oder zusätzlich können die Produkte auch mittels einer Fördervorrichtung gefördert werden, die Durchtrittsöffnungen aufweist, durch die Produktbruch ausgeschieden werden kann, während die medizinischen Produkte auf der Fördervorrichtung verweilen oder weitergefördert werden. Grundsätzlich ist eine hohe Förderleistung erwünscht, wobei eine sichere Ausscheidung des Produktbruchs gewährleistet sein muss. EP 2 110 317 A1 schlägt hierzu vor, die Produkte über eine Lochplatte mit Durchtrittsöffnungen zu fördern, durch die Produktbruch ausgeschieden werden kann. Um hierbei die Förderleistung, bei weiterhin gegebener Gewährleistung einer sicheren Ausscheidung des Produktbruchs, erhöhen zu können, müsste die Fläche der Lochplatte vergrößert werden. Eine solche Lochplatte wäre sperrig und für viele Anwendungsbereiche nicht kompakt genug.

CN 204 817 185 U schlägt weiterhin eine Vorrichtung gemäß dem Oberbegriff des Anspruchs 1 vor, die eingerichtet ist, um Düngersalze bzw. Düngergranulate mit unterschiedlichen Durchmessern in einem Düngergemisch voneinander zu trennen. Die Vorrichtung umfasst ein Trenngehäuse und eine in dem Trenngehäuse angeordnete Schwingförderanordnung mit übereinander angeordneten Siebelementen, wobei jeweils übereinander liegende Siebelemente unterschiedliche Förderrichtungen festlegen. Die Zuführung des Düngergemisches erfolgt über eine Einlassöffnung am oberen Ende des Trenngehäuses. Das Düngergemisch gelangt durch die Einlassöffnung in einen oberen Bereich des Trenngehäuses und gelangt anschließend direkt auf das oberste Siebelement.

Der vorliegenden Erfindung liegt die Aufgabe zugrunde, eine Vorrichtung zur Übergabe von Produkten zu schaffen, die kompakt ist, eine hohe Förderleistung ermöglicht und ein sicheres Ausscheiden des Produktbruchs gewährleistet.

Diese Aufgabe wird durch die Merkmale des Anspruchs 1 gelöst.

Erfindungsgemäß umfasst die Vorrichtung zur Übergabe von Produkten eine Zuführvorrichtung zur Zuführung der Produkte und eine Schwingförderanordnung, die zumindest eine obere und eine untere Lochplatte zum Fördern der von der Zuführvorrichtung empfangenen Produkte aufweist, wobei die obere und untere Lochplatte nach unten geneigt sind und in einem Produktförderpfad aufeinanderfolgend kaskadenförmig angeordnet sind, und wobei die Lochplatten jeweils eine Vielzahl von Durchtrittsöffnungen für Produktbruch aufweisen. Zumindest eine obere und eine untere Ableitvorrichtung, die dem Auffangen und Ableiten des durch die Durchtrittsöffnungen tretenden Produktbruchs dienen, sind unter den Durchtrittsöffnungen der oberen bzw. unteren Lochplatte angeordnet. Die obere Lochplatte definiert eine obere Produktförderrichtung und die untere Lochplatte definiert eine untere Produktförderrichtung, die von der oberen Produktförderrichtung verschieden ist. Weiterhin umfasst die Zuführvorrichtung einen Speicher zum Zwischenspeichern der Produkte, wobei der Speicher eine Speichereinlassöffnung und eine Speicherauslassöffnung zum Abgeben der Produkte aufweist, wobei die Speicherauslassöffnung angrenzend an einen Aufnahmebereich der oberen Lochplatte angeordnet ist. Der Speicher umfasst eine bewegliche Platte zum Bewegen der Produkte, einen Sensor zum Erfassen des Speicherfüllstandes und eine Steuerung zum Steuern der beweglichen Platte, wobei die bewegliche Platte derart eingerichtet ist, dass ein Hin- und Her-Bewegen der beweglichen Platte ein Austreten von Produkten durch die Speicherauslassöffnung bewirkt.

Mit dieser Ausgestaltung ist es möglich, eine hohe Förderleistung zu erzielen, wobei ein sicheres Ausscheiden des Produktbruchs gewährleistet wird, während gleichzeitig eine kompakte Ausgestaltung der Vorrichtung erzielt wird. Weiterhin kann eine die Förderkapazität der Schwingförderanordnung übersteigende Förderleistung gepuffert werden. Schließlich wird ein erhöhter Automatisierungsgrad erzielt und die Zuführung von Produkten auf die obere Lochplatte kann besonders gut gesteuert werden.

Bevorzugt sind dabei zumindest eine horizontale Komponente der oberen Produktförderrichtung und eine horizontale Komponente der unteren Produktförderrichtung unterschiedlich ausgerichtet.

In einer bevorzugten Ausgestaltung sind die horizontale Komponente der oberen Produktförderrichtung und die horizontale Komponente der unteren Produktförderrichtung im Wesentlichen gegenläufig ausgerichtet. Dies ermöglicht eine besonders kompakte Ausgestaltung der Vorrichtung.

In einer Ausführungsform ist die obere Ableitvorrichtung geneigt und definiert eine obere Produktbruch-Förderrichtung, wobei eine horizontale Komponente der oberen Produktbruch-Förderrichtung verschieden ist zur horizontalen Komponente der oberen Produktförderrichtung der oberen Lochplatte. Dadurch wird gewährleistet, dass Produktbruch gezielt abgeleitet werden kann.

Alternativ oder zusätzlich kann die untere Ableitvorrichtung geneigt sein und eine untere Produktbruch-Förderrichtung definieren, wobei eine horizontale Komponente der unteren Produktbruch-Förderrichtung verschieden ist zur horizontalen Komponente der unteren Produktförderrichtung der unteren Lochplatte.

Es ist besonders bevorzugt, dass die horizontale Komponente der oberen Produktbruch-Förderrichtung und die horizontale Komponente der oberen Produktförderrichtung quer zueinander ausgerichtet sind. Dadurch wird eine konstruktiv einfache Ausgestaltung der Vorrichtung und ein sicheres Ableiten des Produktbruchs erzielt.

Alternativ oder zusätzlich können die horizontale Komponente der unteren Produktbruch-Förderrichtung und die horizontale Komponente der unteren Produktförderrichtung quer zueinander ausgerichtet sein.

In bevorzugter Weiterbildung der Erfindung kann die untere Ableitvorrichtung geneigt sein und eine untere Produktbruch-Förderrichtung definieren, wobei eine horizontale Komponente der unteren Produktbruch-Förderrichtung verschieden ist zur horizontalen Komponente der unteren Produktförderrichtung der unteren Lochplatte, wobei die horizontalen Komponenten der oberen und unteren Produktbruch-Förderrichtungen im Wesentlichen gleichgerichtet sind. Dies birgt den Vorteil, dass die Vorrichtung besonders einfach und kompakt ausgestaltet ist.

In einer bevorzugten Ausgestaltung umfasst die Schwingförderanordnung mindestens einen Schacht mit einer Schachteinlassöffnung und einer Schachtauslassöffnung, wobei die zumindest eine obere und eine untere Lochplatte und die zumindest eine obere und eine untere Ableitvorrichtung innerhalb des mindestens einen Schachtes und zwischen der Schachteinlassöffnung und der Schachtauslassöffnung angeordnet sind.

Vorzugsweise sind die obere und untere Lochplatte und/oder die obere und untere Ableitvorrichtung an dem Schacht befestigt.

Es ist bevorzugt, dass die Schwingförderanordnung mehrere Paare von Lochplatten umfasst, die jeweils aus einer oberen und einer unteren Lochplatte gebildet sind, und dass die Vorrichtung mehrere Paare von Ableitvorrichtungen umfasst, die jeweils aus einer oberen und einer unteren Ableitvorrichtung gebildet sind, wobei die mehreren Paare von Lochplatten untereinander angeordnet sind. Dadurch wird eine besonders kompakte Ausgestaltung der Vorrichtung bei vergrößerter Arbeitsfläche erzielt.

Es ist besonders bevorzugt, dass die Lochplatten zickzackförmig angeordnet sind. Somit wird eine kompakte Ausgestaltung der Vorrichtung erzielt, die verfügbaren Bauraum effektiv ausnutzen kann.

Vorzugsweise bildet die Speicherauslassöffnung die Schachteinlassöffnung.

Es ist besonders bevorzugt, dass die bewegliche Platte die Produkte im Speicher von unten stützt.

Vorzugsweise umfasst der Speicher eine Produktüberschussauslassöffnung, die oberhalb der Speicherauslassöffnung angeordnet ist.

In einer Ausführungsform umfasst die Vorrichtung eine zweite Schwingförderanordnung, die zumindest eine obere und eine untere Lochplatte zum Fördern der von der Zuführvorrichtung empfangenen Produkte aufweist, wobei die obere und untere Lochplatte nach unten geneigt sind und in einem Produktförderpfad aufeinanderfolgend kaskadenförmig angeordnet sind, und wobei die Lochplatten jeweils eine Vielzahl von Durchtrittsöffnungen für Produktbruch aufweisen. Die Vorrichtung umfasst zumindest eine weitere obere und eine weitere untere Ableitvorrichtung, die unter den Durchtrittsöffnungen der oberen bzw. unteren Lochplatte der zweiten Schwingförderanordnung angeordnet sind, zum Auffangen und Ableiten des durch die Durchtrittsöffnungen tretenden Produktbruchs, wobei die obere Lochplatte der zweiten Schwingförderanordnung eine obere Produktförderrichtung definiert und die untere Lochplatte der zweiten Schwingförderanordnung eine untere Produktförderrichtung definiert, die von der oberen Produktförderrichtung verschieden ist, wobei bevorzugt zumindest eine horizontale Komponente der oberen Produktförderrichtung und eine horizontale Komponente der unteren Produktförderrichtung unterschiedlich ausgerichtet sind. Dadurch kann die Förderleistung der Vorrichtung erhöht werden.

Vorzugsweise können die weitere obere und weitere untere Ableitvorrichtung an der zweiten Schwingförderanordnung befestigt oder Teil dieser sein.

Es ist besonders bevorzugt, dass der Speicher zwei Speicherauslassöffnungen aufweist, die jeweils angrenzend an den Aufnahmebereich der oberen Lochplatte der ersten oder zweiten Schwingförderanordnung angeordnet sind, wobei die zwei Speicherauslassöffnungen auf im Wesentlichen gleicher Höhe angeordnet sind. Dadurch wird eine möglichst gleichmäßige Auslastung der beiden Schwingförderanordnungen erzielt, wodurch die Förderleistung optimiert wird.

Es ist besonders bevorzugt, dass der Speicher zwischen den zwei Schwingförderanordnungen angeordnet ist, wobei die zwei Schwingförderanordnungen symmetrisch in Bezug auf den Speicher angeordnet sind. Somit kann eine kompakte Ausgestaltung der Vorrichtung realisiert werden.

In weiteren Ausführungsformen umfasst die Vorrichtung eine dritte, eine vierte oder eine beliebige weitere Anzahl an Schwingförderanordnungen, die zumindest eine obere und eine untere Lochplatte zum Fördern der von der Zuführvorrichtung empfangenen Produkte aufweist, wobei die obere und untere Lochplatte nach unten geneigt sind und in einem Produktförderpfad aufeinanderfolgend kaskadenförmig angeordnet sind, und wobei die Lochplatten jeweils eine Vielzahl von Durchtrittsöffnungen für Produktbruch aufweisen.

In einer bevorzugten Ausführungsform weist die Vorrichtung ein Gehäuse auf, das die Schwingförderanordnungen und den Speicher umgibt. Dies ermöglicht eine Kontrolle der Umgebungsbedingungen wie beispielsweise Luftfeuchtigkeit, Temperatur und Begasung. Zudem bietet das Gehäuse einen Schutz vor Kontamination der Produkte und umgekehrt auch einen Schutz vor Verschmutzung der Umgebung.

Das Gehäuse umgibt dann auch die Ableitvorrichtungen.

Weiterhin ist es in alternativen Ausführungsformen auch möglich, dass lediglich eine Schwingförderanordnung vorliegt und das Gehäuse nur diese eine Schwingförderanordnung umgibt. Ebenso ist es möglich, dass lediglich eine Schwingförderanordnung und ein Speicher vorliegen und das Gehäuse nur diese beiden Komponenten umgibt.

Vorzugsweise umfasst das Gehäuse mindestens eine Gehäuseeinlassöffnung und mindestens eine Gehäuseauslassöffnung. In einer Ausführungsform ist die mindestens eine Gehäuseauslassöffnung derart in einem unteren Bereich des Gehäuses ausgebildet, dass die Produkte von mindestens einer Schwingförderanordnung, bevorzugt von beiden Schwingförderanordnungen, durch die mindestens eine Gehäuseauslassöffnung abgegeben werden können.

In einer Ausgestaltung ist das Gehäuse fest mit der mindestens einen Schwingförderanordnung verbunden oder bildet einen Teil derselben.

Der mindestens eine Schwingantrieb kann direkt an einer oder an mehreren Lochplatten mindestens einer Schwingförderanordnung, am Schacht mindestens einer Schwingförderanordnung oder am Gehäuse befestigt sein. Besonders bevorzugt stützt der mindestens eine Schwingantrieb das Gehäuse von unten.

In einer bevorzugten Ausgestaltung umfasst die Vorrichtung einen Auffangbehälter zum Aufnehmen des von mindestens einer Ableitvorrichtung abgeleiteten Produktbruchs, wobei der Auffangbehälter angrenzend an die mindestens eine Ableitvorrichtung angeordnet sein kann. Bevorzugt ist der Auffangbehälter am Schacht und/oder am Gehäuse befestigt.

Weitere Merkmale und Vorteile der vorliegenden Erfindung ergeben sich aus der nachfolgenden Beschreibung unter Bezugnahme auf die Zeichnungen.
- Fig. 1: ist eine schematische perspektivische Querschnittsansicht einer Ausführungsform der erfindungsgemäßen Vorrichtung zur Übergabe von Produkten;
- Fig. 2: ist eine Vergrößerung des in Fig. 1 dargestellten Kreisausschnitts;
- Fig. 3: ist eine schematische Vorderansicht eines Querschnitts der erfindungsgemäßen Vorrichtung zur Übergabe von Produkten aus Fig. 1; und
- Fig. 4: ist eine schematische Seitenansicht eines Querschnitts der erfindungsgemäßen Vorrichtung zur Übergabe von Produkten aus Fig. 1.

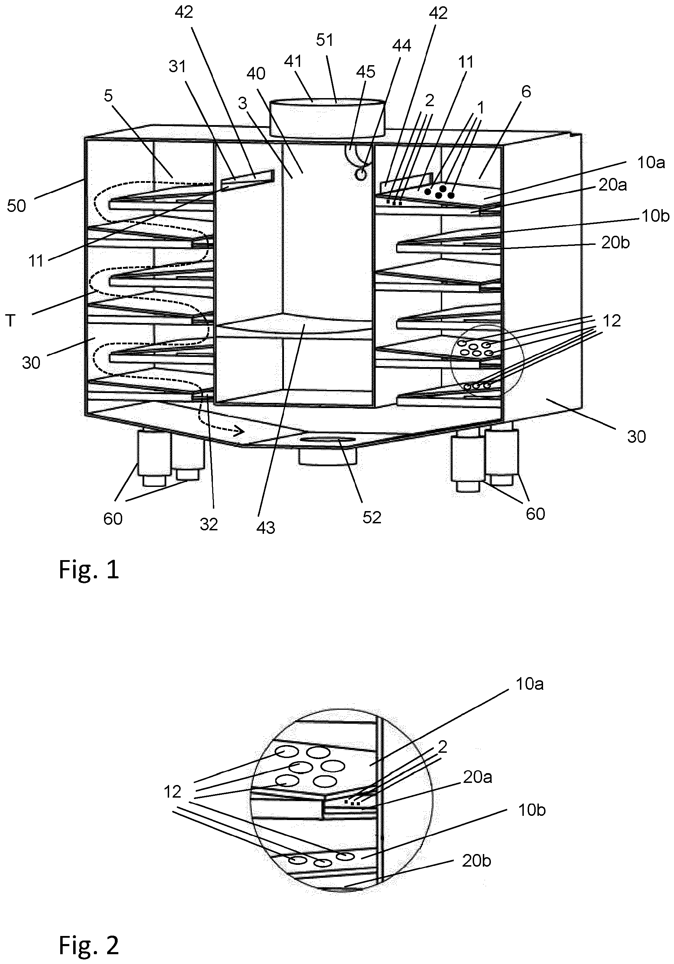

In Fig. 1 ist eine Ausführungsform der erfindungsgemäßen Vorrichtung zur Übergabe von Produkten 1 dargestellt. Im Rahmen der Erfindung liegen die Produkte 1 vorzugsweise als rieselfähige Produkte vor, insbesondere pharmazeutische Produkte, beispielsweise in Form von Tabletten, Kapseln, Dragees oder Oblongs.

Die Ausführungsform nach Fig. 1 umfasst eine Zuführvorrichtung 3 zur Zuführung der Produkte 1 sowie eine erste Schwingförderanordnung 5 und eine zweite Schwingförderanordnung 6.

Die Schwingförderanordnungen 5, 6 weisen jeweils mehrere Paare von oberen und unteren Lochplatten 10a, 10b auf, die dem Fördern der von der Zuführvorrichtung 3 empfangenen Produkte 1 dienen. Die obere Lochplatte 10a, die in der jeweiligen Schwingförderanordnung 5, 6 zuoberst angeordnet ist, weist einen Aufnahmebereich 11 zum Aufnehmen der Produkte 1 auf.

Nach dem Aufnehmen der Produkte 1 in dem jeweiligen Aufnahmebereich 11 werden die Produkte 1 über die aufeinanderfolgend kaskadenförmig angeordneten Lochplatten 10a, 10b gefördert. Die Lochplatten 10a, 10b sind nach unten geneigt. Die Produkte 1 werden von der oberen Lochplatte 10a auf die jeweils darunter angeordnete untere Lochplatte 10b gefördert, bevorzugt fallen die Produkte über eine kurze Distanz auf die jeweils darunterliegende Lochplatte 10b. Die Enden der Lochplatten 10a, 10b sind in allen Ausführungsformen bevorzugt versetzt zueinander. Wenn, wie im hier dargestellten Beispielsfall, mehr als zwei Lochplatten 10a, 10b vorliegen, werden die Produkte 1 über alle Lochplatten 10a, 10b nacheinander gefördert. Insgesamt ergibt sich in jedem Fall ein Produktförderpfad T, der kaskadenförmig ausgebildet ist.

Die Lochplatten 10a, 10b weisen eine Vielzahl von Durchtrittsöffnungen 12 auf, durch die Produktbruch 2 hindurch treten kann. Allgemein im Rahmen der Erfindung soll der Begriff "Produktbruch" auch Produktstaub und Abrieb mit umfassen, ebenso auszusortierende Produkte derselben oder einer anderen Art, die eine geringere Größe aufweisen als die Gutprodukte.

Unterhalb der Durchtrittsöffnungen 12 der jeweiligen oberen und unteren Lochplatte 10a, 10b sind eine obere bzw. eine untere Ableitvorrichtung 20a, 20b angeordnet. Der Produktbruch 2 wird von den Ableitvorrichtungen 20a, 20b aufgefangen und abgeleitet. Die Produkte 1 werden hingegen auf den Lochplatten 10a, 10b weiter gefördert.

Die Schwingförderanordnungen 5, 6 umfassen jeweils einen Schacht 30. Die Schächte 30 weisen jeweils eine Schachteinlassöffnung 31 und eine Schachtauslassöffnung 32 auf. Die Ableitvorrichtungen 20a, 20b sind an dem jeweiligen Schacht 30 befestigt. Zwischen den beiden Schächten 30 ist ein Speicher 40 angeordnet, wobei der Speicher 40 einen Teil der Zuführvorrichtung 3 bildet. Die Schwingförderanordnungen 5, 6 sind in Bezug auf den Speicher 40 spiegelsymmetrisch angeordnet. Dem Speicher 40 werden die Produkte 1 durch eine Speichereinlassöffnung 41 zugeführt. Die Zuführung der Produkte 1 in den Speicher 40 kann beispielsweise über einen Zuführtrichter (nicht dargestellt) erfolgen.

Nach dem Zuführen der Produkte 1 in den Speicher 40 werden die Produkte 1 auf einer beweglichen Platte 43 von unten gestützt. Durch ein Hin- und Her-Bewegen, insbesondere durch ein Auf- und Ab-Bewegen der beweglichen Platte 43, werden die Produkte 1 durch die zwei Speicherauslassöffnungen 42, die den Schachteinlassöffnungen 31 entsprechen, in den jeweiligen Aufnahmebereich 11 der obersten Lochplatte 10a abgegeben, der an die eine bzw. an die andere Speicherauslassöffnung 42 angrenzend angeordnet ist. Der Speicher 40 umfasst zudem einen Sensor 44, mit dem der Füllstand des Speichers 40 erfasst werden kann und eine Steuerung 45 zum Steuern der beweglichen Platte 43.

Der Speicher 40 und die Schwingförderanordnungen 5, 6 sind von einem Gehäuse 50 umgeben, wobei das Gehäuse 50 einen Teil des Speichers 40 und einen Teil der Schwingförderanordnungen 5, 6 bildet. In einem oberen Bereich des Gehäuses 50 ist mittig eine Gehäuseeinlassöffnung 51 ausgebildet. Die Gehäuseeinlassöffnung 51 bildet auch die Speichereinlassöffnung 41. Die Gehäuseeinlassöffnung 51 und die Speichereinlassöffnung 41 können aber auch separat vorliegen. Die Produkte 1 werden dem Speicher 40 durch die Gehäuseeinlassöffnung 51 bzw. die Speichereinlassöffnung 41 zugeführt. Des Weiteren umfasst das Gehäuse 50 eine Gehäuseauslassöffnung 52, die in einem unteren Bereich des Gehäuses 50 mittig ausgebildet ist. Die Produkte 1 werden von der jeweiligen unteren Lochplatte 10b, die in der einen oder der anderen Schwingförderanordnung 5, 6 zuunterst angeordnet ist, zur Gehäuseauslassöffnung 52 gefördert und durch diese hindurch abgegeben. Die Gehäuseauslassöffnung 52 kann mit den Schachtauslassöffnungen 32 zusammenfallen oder, wie hier dargestellt, können die Produkte von der Schachtauslassöffnung 32 in Richtung der Gehäuseauslassöffnung 52 weiter gefördert werden. Hierfür wird vorzugsweise jeweils eine weitere schräg angeordnete Platte verwendet, die ebenfalls vibrieren kann.

Wie in Fig. 1 gezeigt, stützen vier Schwingantriebe 60 das Gehäuse 50 von unten. Die vier Schwingantriebe 60 sind fest mit dem Gehäuse 50 verbunden und versetzen das Gehäuse 60 in Schwingung bzw. in Vibration. Durch die vier Schwingantriebe 60 werden die Lochplatten 10a, 10b, die Ableitvorrichtungen 20a, 20b und der Speicher 40 in Schwingung bzw. in Vibration versetzt, wodurch die Produkte 1 und der Produktbruch 2 gefördert werden. Jede andere Anzahl von Schwingantrieben 60 ist ebenfalls möglich.

Fig. 2 zeigt eine Vergrößerung des in Fig. 1 dargestellten Kreisausschnitts. Die dargestellte obere und untere Lochplatte 10a, 10b weisen jeweils eine Vielzahl von Durchtrittsöffnungen 12 auf. Produktbruch 2 und Produktstaub können durch die Durchtrittsöffnungen 12 hindurch treten und werden von der oberen bzw. unteren Ableitvorrichtung 20a, 20b aufgefangen. Die Durchtrittsöffnungen 12 sind bezüglich ihrer Größe und Form vorzugsweise auf die jeweils zu fördernden Produkte 1 angepasst.

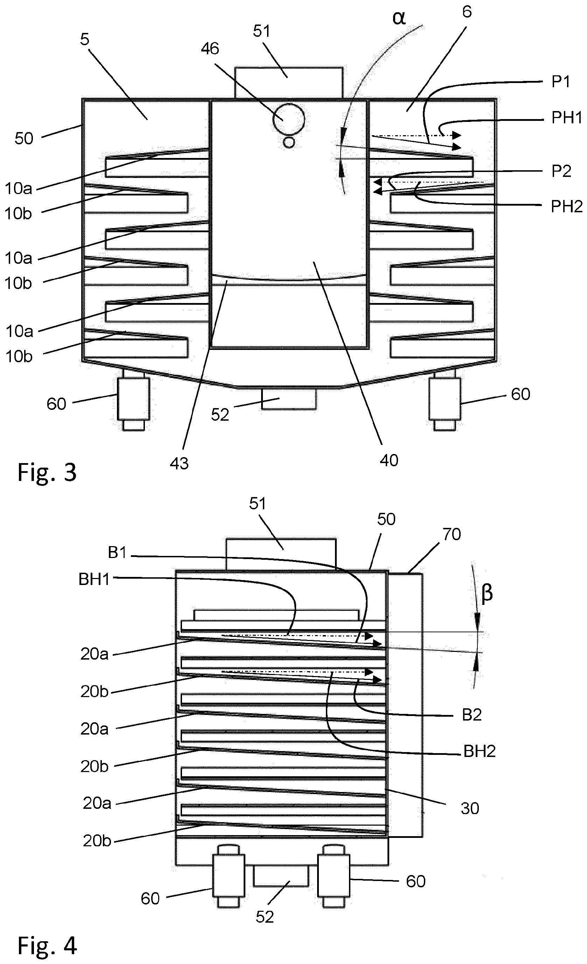

Fig. 3 zeigt eine Vorderansicht der Ausführungsform aus Fig. 1 im Querschnitt. Die Schwingförderanordnungen 5, 6 umfassen jeweils mehrere Paare von Lochplatten 10a, 10b, die jeweils aus einer oberen und einer unteren Lochplatte 10a, 10b gebildet sind.

Die Lochplatten 10a, 10b der Paare von Lochplatten 10a, 10b der Schwingförderanordnungen 5, 6 sind zickzackförmig angeordnet und sind gegenüber der Horizontalen um den Winkel α nach unten geneigt.

Der Winkel α liegt in allen Ausführungsformen bevorzugt zwischen 0,5° und 45°, mehr bevorzugt zwischen 1° und 30°, noch mehr bevorzugt zwischen 2° und 10°.

Die Produkte 1 werden auf der oberen Lochplatte 10a in einer oberen Produktförderrichtung P1 und auf der unteren Lochplatte 10b in einer unteren Produktförderrichtung P2 gefördert. Eine horizontale Komponente PH1 der oberen Produktförderrichtung P1 ist im Wesentlichen gegenläufig zu einer horizontalen Komponente PH2 der unteren Produktförderrichtung P2 ausgerichtet.

Der Speicher 40 umfasst eine Produktüberschussauslassöffnung 46, die oberhalb der zwei Speicherauslassöffnungen 42 angeordnet ist. Nicht benötigte Produkte 1 können durch die Produktüberschussauslassöffnung 46 ausgegeben werden.

Fig. 4 zeigt eine Seitenansicht der Ausführungsform aus Fig. 1 im Querschnitt. Die Schwingförderanordnungen 5, 6 (lediglich die zweite Schwingförderanordnung 6 ist dargestellt) umfassen jeweils mehrere Paare von Ableitvorrichtungen 20a, 20b, die jeweils aus einer oberen und einer unteren Ableitvorrichtung 20a, 20b gebildet sind. Die Ableitvorrichtungen 20a, 20b sind gegenüber der Horizontalen um den Winkel β nach unten geneigt. Der Winkel β ist nur bei der oberen Ableitvorrichtung 20a, die zuoberst angeordnet ist, dargestellt. Die Ableitvorrichtungen 20a, 20b können auch als separate Komponenten vorliegen, die nicht Teil einer Schwingförderanordnung 5, 6 sind. In diesem Fall ist es notwendig, dass ihr Winkel β zur Horizontalen groß genug ist, dass der Produktbruch sicher entfernt wird.

Der Winkel β liegt in allen Ausführungsformen vorzugsweise zwischen 0,5° und 45°, mehr bevorzugt zwischen 1° und 40°. Die Ableitvorrichtungen 20a, 20b können in allen Ausführungsformen auch gekrümmt sein.

Die oberen Ableitvorrichtungen 20a definieren jeweils eine obere Produktbruch-Förderrichtung B1 und die unteren Ableitvorrichtungen 20b definieren jeweils eine untere Produktbruch-Förderrichtung B2. Eine horizontale Komponente BH1 der oberen Produktbruch-Förderrichtung B1 und eine horizontale Komponente BH2 der unteren Produktbruch-Förderrichtung B2 sind im Wesentlichen gleichgerichtet. Dies ist lediglich für die obere Ableitvorrichtung 20a, die zuoberst angeordnet ist, und für die untere Ableitvorrichtung 20b, die zuoberst angeordnet ist, dargestellt.

Die horizontalen Komponenten BH1, BH2 der oberen und unteren Produktbruch-Förderrichtung B1, B2 sind quer zu den horizontalen Komponenten PH1, PH2 der oberen und unteren Produktförderrichtung P1, P2 ausgerichtet, wobei die horizontalen Komponenten PH1, PH2 der oberen und unteren Produktförderrichtung P1, P2 nicht dargestellt sind und sich in die Zeichenebene hinein bzw. aus der Zeichenebene heraus erstrecken.

Wie in Fig. 4 gezeigt, sind die horizontale Komponente BH1 der oberen Produktbruch-Förderrichtung B1 und die horizontale Komponente BH2 der unteren Produktbruch-Förderrichtung B2 jeweils nach rechts in Richtung eines Auffangbehälters 70 gerichtet. Gleiches trifft auf die weiteren horizontalen Komponenten BH1, BH2 der jeweiligen weiteren Produktbruch-Förderrichtungen der anderen Ableitvorrichtungen 20a, 20b zu. Der Auffangbehälter 70 ist an dem Gehäuse 50 bzw. an den beiden Schächten 30 (nur ein Schacht 30 ist dargestellt) befestigt, wobei der Auffangbehälter 70 derart angrenzend an die Ableitvorrichtungen 20a, 20b angeordnet ist, dass Produktbruch 2 von den Ableitvorrichtungen 20a, 20b in den Auffangbehälter 70 gelangt.

Im Folgenden wird die Funktionsweise der in Fig. 1 bis 4 dargestellten Ausführungsform der Vorrichtung zur Übergabe von Produkten 1 beschrieben.

Die Produkte 1 werden dem Speicher 40 durch die Speichereinlassöffnung 41 bzw. die Gehäuseeinlassöffnung 51 zugeführt. Die Zuführung der Produkte 1 kann über einen Zuführtrichter (nicht dargestellt) erfolgen.

Im Speicher 40 werden die Produkte 1 durch die bewegliche Platte 43 von unten gestützt, wobei die bewegliche Platte 43 während der Zuführung der Produkte 1 derart bewegt wird, dass eine Fallhöhe der Produkte 1 im Speicher 40 verringert wird. Einer Beschädigung der Produkte 1 wird damit vorgebeugt. Durch ein Auf- und Ab-Bewegen der beweglichen Platte 43 werden die Produkte 1 durch zwei sich gegenüberliegende Speicherauslassöffnungen 42 gefördert und in den jeweiligen Aufnahmebereich 11 der obersten Lochplatte 10a übergeben, der angrenzend an die jeweilige Speicherauslassöffnung 42 angeordnet ist. Die Lochplatten 10a, 10b sind nach unten geneigt und definieren jeweils eine Produktförderrichtung P1, P2. Die Produkte 1 werden über die Lochplatten 10a, 10b der jeweiligen Schwingförderanordnung 5, 6 entlang eines jeweiligen kaskadenförmigen Produktförderpfades T gefördert. Es ergibt sich dabei auch eine Vereinzelung der Produkte 1.

Während Produktbruch 2, Produktstaub und/oder anderweitige zu kleine Produkte oder Produktteile durch die Durchtrittsöffnungen 12 der Lochplatten 10a, 10b hindurch treten können, werden die Produkte 1 auf den Lochplatten 10a, 10b weiter gefördert. Der Produktbruch 2 wird von den nach unten geneigten Ableitvorrichtungen 20a, 20b, die jeweils unter jeder Lochplatte 10a, 10b angeordnet sind, aufgefangen und in Richtung des Auffangbehälters 70 abgeleitet.

Die Lochplatten 10a, 10b, die Ableitvorrichtungen 20a, 20b, der Speicher 40 und das Gehäuse 50 werden durch vier Schwingantriebe 60 in Schwingung bzw. in Vibration versetzt, wodurch die Bewegung der Produkte 1 und des Produktbruchs 2 gefördert bzw. erzeugt wird.

Die validen Produkte 1 werden schließlich von der untersten Lochplatte 10b der jeweiligen Schwingförderanordnung 5, 6 aus zur Gehäuseauslassöffnung 51 gefördert und treten durch diese im Wesentlichen vereinzelt hindurch. Unterhalb der Gehäuseauslassöffnung 51 kann ein Behälter (nicht dargestellt) vorgesehen sein, in den die Produkte 1 übergegeben werden.

In der in den Fig. 1 bis 4 dargestellten Ausführungsform sind genau zwei Schwingförderanordnungen 5, 6 dargestellt, die jeweils spiegelsymmetrisch zur vertikalen Mittelebene des Speichers 40 ausgebildet sind und eine identische Anordnung von Lochplatten 10a, 10b aufweisen.

Erfindungsgemäß sind viele Modifikationen dieser Ausgestaltung möglich. In einer einfachen Modifikation liegt lediglich eine Schwingförderanordnung 5 ohne Speicher 40 vor. In diesem Fall erfolgt die Zuführung von Produkten 1 direkt auf die obere Lochplatte 10a. Ebenfalls denkbar ist eine Ausführungsform mit Speicher 40 und lediglich einer Schwingförderanordnung 5 bzw. 6. Schließlich ist es auch möglich, einen Speicher mit mehr als zwei Schwingförderanordnungen 5, 6 zu kombinieren oder zwei Schwingförderanordnungen 5, 6 ohne Speicher 40 zu kombinieren.

Die eine oder jede Schwingförderanordnung 5, 6 kann genau zwei Lochplatten 10a, 10b aufweisen, aber auch jede beliebige andere Anzahl von mehr als zwei Lochplatten 10a, 10b. Bevorzugt ist eine gerade Anzahl von Lochplatten 10a, 10b. Liegen mehrere Paare von Lochplatten 10a, 10b vor, so sind diese Paare bevorzugt identisch wie die anderen Paare ausgebildet und angeordnet. Insbesondere kann die Ausrichtung der Produktförderrichtungen P1, P2 bei jedem Paar von Lochplatten 10a, 10b identisch sein. Es ist aber auch möglich, dass sich die Produktförderrichtungen P1, P2 verschiedener Paare von Lochplatten 10a, 10b unterscheiden. Auch der Winkel α kann für jede Lochplatte 10a, 10b oder für einige der Lochplatten 10a, 10b unterschiedlich sein.

Im dargestellten Ausführungsbeispiel verläuft der Produktförderpfad T jeweils zickzackförmig, er kann aber auch in mehr als zwei Dimensionen verlaufen. Der kaskadierende Produktförderpfad T kann somit in Draufsicht auch entlang eines dreieckförmigen oder viereckförmigen Umrisses verlaufen.

Jede Lochplatte 10a, 10b bzw. jede Schwingförderanordnung 5, 6 kann auch einen eigenen Schwingantrieb 60 aufweisen.

## Patentansprüche

1. Vorrichtung zur Übergabe von Produkten (1), umfassend:
eine Zuführvorrichtung (3) zur Zuführung der Produkte (1);
eine Schwingförderanordnung (5), die zumindest eine obere und eine untere Lochplatte (10a, 10b) zum Fördern der von der Zuführvorrichtung (3) empfangenen Produkte (1) aufweist, wobei die obere und untere Lochplatte (10a, 10b) nach unten geneigt sind und in einem Produktförderpfad (T) aufeinanderfolgend kaskadenförmig angeordnet sind, und wobei die Lochplatten (10a, 10b) jeweils eine Vielzahl von Durchtrittsöffnungen (12) aufweisen; und
zumindest eine obere und eine untere Ableitvorrichtung (20a, 20b), die unter den Durchtrittsöffnungen (12) der oberen bzw. unteren Lochplatte (10a, 10b) angeordnet sind, zum Auffangen und Ableiten des durch die Durchtrittsöffnungen (12) tretenden Produktbruchs (2),
wobei die obere Lochplatte (10a) eine obere Produktförderrichtung (P1) definiert und
die untere Lochplatte (10b) eine untere Produktförderrichtung (P2) definiert, die von der oberen Produktförderrichtung (P1) verschieden ist,
wobei die Zuführvorrichtung (3) einen Speicher (40) zum Zwischenspeichern der Produkte (1) umfasst, wobei der Speicher (40) eine Speichereinlassöffnung (41) und eine Speicherauslassöffnung (42) zum Abgeben der Produkte (1) aufweist, wobei die Speicherauslassöffnung (42) angrenzend an einen Aufnahmebereich (11) der oberen Lochplatte (10a) angeordnet ist,
**dadurch gekennzeichnet, dass**
der Speicher (40) eine bewegliche Platte (43) zum Bewegen der Produkte (1), einen Sensor (44) zum Erfassen des Speicherfüllstandes und eine Steuerung (45) zum Steuern der beweglichen Platte (43) umfasst, wobei die bewegliche Platte (43) derart eingerichtet ist, dass ein Hin- und Her-Bewegen der beweglichen Platte (43) ein Austreten von Produkten (1) durch die Speicherauslassöffnung (42) bewirkt.

2. Vorrichtung nach Anspruch 1, **dadurch gekennzeichnet, dass** zumindest eine horizontale Komponente (PH1) der oberen Produktförderrichtung (P1) und eine horizontale Komponente (PH2) der unteren Produktförderrichtung (P2) unterschiedlich ausgerichtet sind.

3. Vorrichtung nach Anspruch 2, **dadurch gekennzeichnet, dass** die horizontale Komponente (PH1) der oberen Produktförderrichtung (P1) und die horizontale Komponente (PH2) der unteren Produktförderrichtung (P2) im Wesentlichen gegenläufig ausgerichtet sind.

4. Vorrichtung nach einem der vorangehenden Ansprüche, **dadurch gekennzeichnet, dass** die obere Ableitvorrichtung (20a) geneigt ist und eine obere Produktbruch-Förderrichtung (B1) definiert, wobei eine horizontale Komponente (BH1) der oberen Produktbruch-Förderrichtung (B1) verschieden ist zur horizontalen Komponente (PH1) der oberen Produktförderrichtung (P1) der oberen Lochplatte (10a).

5. Vorrichtung nach Anspruch 4, **dadurch gekennzeichnet, dass** die horizontale Komponente (BH1) der oberen Produktbruch-Förderrichtung (B1) und die horizontale Komponente (PH1) der oberen Produktförderrichtung (P1) quer zueinander ausgerichtet sind.

6. Vorrichtung nach Anspruch 4 oder 5, **dadurch gekennzeichnet, dass** die untere Ableitvorrichtung (20b) geneigt ist und eine untere Produktbruch-Förderrichtung (B2) definiert, wobei eine horizontale Komponente (BH2) der unteren Produktbruch-Förderrichtung (B2) verschieden ist zur horizontalen Komponente (PH2) der unteren Produktförderrichtung (P2) der unteren Lochplatte (10b), wobei die horizontalen Komponenten (BH1, BH2) der oberen und unteren Produktbruch-Förderrichtungen (B1, B2) im Wesentlichen gleichgerichtet sind.

7. Vorrichtung nach einem der vorangehenden Ansprüche, **dadurch gekennzeichnet, dass** die Schwingförderanordnung (5) mindestens einen Schacht (30) mit einer Schachteinlassöffnung (31) und einer Schachtauslassöffnung (32) umfasst, wobei die zumindest eine obere und eine untere Lochplatte (10a, 10b) und die zumindest eine obere und eine untere Ableitvorrichtung (20a, 20b) innerhalb des mindestens einen Schachtes (30) und zwischen der Schachteinlassöffnung (31) und der Schachtauslassöffnung (32) angeordnet sind.

8. Vorrichtung nach einem der vorangehenden Ansprüche, **dadurch gekennzeichnet, dass** die Schwingförderanordnung (5) mehrere Paare von Lochplatten (10a, 10b) umfasst, die jeweils aus einer oberen und einer unteren Lochplatte (10a, 10b) gebildet sind, und dass die Vorrichtung mehrere Paare von Ableitvorrichtungen (20a, 20b) umfasst, die jeweils aus einer oberen und einer unteren Ableitvorrichtung (20a, 20b) gebildet sind, wobei die mehreren Paare von Lochplatten (10a, 10b) untereinander angeordnet sind.

9. Vorrichtung nach Anspruch 8, **dadurch gekennzeichnet, dass** die Lochplatten (10a, 10b) zickzackförmig angeordnet sind.

10. Vorrichtung nach Anspruch 1, **dadurch gekennzeichnet, dass** die bewegliche Platte (43) die Produkte (1) im Speicher (40) von unten stützt.

11. Vorrichtung nach einem der Ansprüche 1 bis 10, **dadurch gekennzeichnet, dass** die Vorrichtung eine zweite Schwingförderanordnung (6) umfasst, die zumindest eine obere und eine untere Lochplatte (10a, 10b) zum Fördern der von der Zuführvorrichtung (3) empfangenen Produkte (1) aufweist, wobei die obere und untere Lochplatte (10a, 10b) nach unten geneigt sind und in einem Produktförderpfad (T) aufeinanderfolgend kaskadenförmig angeordnet sind, und wobei die Lochplatten (10a, 10b) jeweils eine Vielzahl von Durchtrittsöffnungen (12) für Produktbruch (2) aufweisen; und wobei die Vorrichtung zumindest eine weitere obere und eine weitere untere Ableitvorrichtung (20a, 20b) umfasst, die unter den Durchtrittsöffnungen (12) der oberen bzw. unteren Lochplatte (10a, 10b) der zweiten Schwingförderanordnung (6) angeordnet sind, zum Auffangen und Ableiten des durch die Durchtrittsöffnungen (12) tretenden Produktbruchs (2),
wobei die obere Lochplatte (10a) der zweiten Schwingförderanordnung (6) eine obere Produktförderrichtung (P1) definiert und die untere Lochplatte (10b) der zweiten Schwingförderanordnung (6) eine untere Produktförderrichtung (P2) definiert, die von der oberen Produktförderrichtung (P1) verschieden ist, wobei zumindest eine horizontale Komponente (PH1) der oberen Produktförderrichtung (P1) und eine horizontale Komponente (PH2) der unteren Produktförderrichtung (P2) unterschiedlich ausgerichtet sind.

12. Vorrichtung nach Anspruch 11, **dadurch gekennzeichnet, dass** der Speicher (40) zwei Speicherauslassöffnungen (42) aufweist, die jeweils angrenzend an den Aufnahmebereich (11) der oberen Lochplatte (10a) der ersten bzw. zweiten Schwingförderanordnung (5, 6) angeordnet sind, wobei die zwei Speicherauslassöffnungen (42) auf im Wesentlichen gleicher Höhe angeordnet sind.

13. Vorrichtung nach Anspruch 12, **dadurch gekennzeichnet, dass** der Speicher (40) zwischen den zwei Schwingförderanordnungen (5, 6) angeordnet ist, wobei die zwei Schwingförderanordnungen (5, 6) symmetrisch in Bezug auf den Speicher (40) angeordnet sind.

14. Vorrichtung nach einem der Ansprüche 11 bis 13, **dadurch gekennzeichnet, dass** die Vorrichtung ein Gehäuse (50) aufweist, das die Schwingförderanordnungen (5, 6) und den Speicher (40) umgibt.

## Claims

1. Device for transferring products (1), comprising:
a feed device (3) for feeding the products (1);
an oscillating-conveyor arrangement (5), which has at least one upper and one lower perforated plate (10a, 10b) for conveyance of the products (1) received from the feed device (3), wherein the upper and lower perforated plates (10a, 10b) are inclined downwards and are arranged in the form of a cascade in a successive manner in a product-conveyance path (T), and wherein the perforated plates (10a, 10b) each have a multiplicity of passage openings (12); and
at least one upper and one lower diversion device (20a, 20b), which are arranged below the passage openings (12) of the upper and lower perforated plate (10a, 10b), respectively, and which serve for collecting and diverting the product breakage (2) passing through the passage openings (12),
wherein the upper perforated plate (10a) defines an upper product-conveyance direction (P1) and the lower perforated plate (10b) defines a lower product-conveyance direction (P2), which is different from the upper product-conveyance direction (P1),
wherein the feed device (3) comprises a store (40) for intermediate storage of the products (1),
wherein the store (40) has a store inlet opening (41) and a store outlet opening (42) for delivering the products (1), wherein the store outlet opening (42) is arranged adjacent to a receiving region (11) of the upper perforated plate (10a),
**characterized in that**
the store (40) comprises a movable plate (43) for moving the products (1), a sensor (44) for detecting the store fill level and a controller (45) for controlling the movable plate (43), wherein the movable plate (43) is configured in such a way that a back-and-forth movement of the movable plate (43) causes products (1) to exit through the store outlet opening (42).

2. Device according to Claim 1, **characterized in that** at least one horizontal component (PH1) of the upper product-conveyance direction (P1) and one horizontal component (PH2) of the lower product-conveyance direction (P2) have different orientations.

3. Device according to Claim 2, **characterized in that** the horizontal component (PH1) of the upper product-conveyance direction (P1) and the horizontal component (PH2) of the lower product-conveyance direction (P2) have substantially opposite orientations.

4. Device according to one of the preceding claims, **characterized in that** the upper diversion device (20a) is inclined and defines an upper product-breakage-conveyance direction (B1), wherein a horizontal component (BH1) of the upper product-breakage-conveyance direction (B1) is different from the horizontal component (PH1) of the upper product-conveyance direction (P1) of the upper perforated plate (10a).

5. Device according to Claim 4, **characterized in that** the horizontal component (BH1) of the upper product-breakage-conveyance direction (B1) and the horizontal component (PH1) of the upper product-conveyance direction (P1) are oriented transversely to one another.

6. Device according to Claim 4 or 5, **characterized in that** the lower diversion device (20b) is inclined and defines a lower product-breakage-conveyance direction (B2), wherein a horizontal component (BH2) of the lower product-breakage-conveyance direction (B2) is different from the horizontal component (PH2) of the lower product-conveyance direction (P2) of the lower perforated plate (10b), wherein the horizontal components (BH1, BH2) of the upper and lower product-breakage-conveyance directions (B1, B2) have substantially the same orientation.

7. Device according to one of the preceding claims, **characterized in that** the oscillating-conveyor arrangement (5) comprises at least one shaft (30), which has a shaft inlet opening (31) and a shaft outlet opening (32), wherein the at least one upper and one lower perforated plate (10a, 10b) and the at least one upper and one lower diversion device (20a, 20b) are arranged within the at least one shaft (30) and between the shaft inlet opening (31) and the shaft outlet opening (32).

8. Device according to one of the preceding claims, **characterized in that** the oscillating-conveyor arrangement (5) comprises multiple pairs of perforated plates (10a, 10b), each being formed from an upper and a lower perforated plate (10a, 10b), and **in that** the device comprises multiple pairs of diversion devices (20a, 20b), each being formed from an upper and a lower diversion device (20a, 20b), wherein the multiple pairs of perforated plates (10a, 10b) are arranged one below the other.

9. Device according to Claim 8, **characterized in that** the perforated plates (10a, 10b) are arranged in zigzag form.

10. Device according to Claim 1, **characterized in that** the movable plate (43) supports the products (1) in the store (40) from below.

11. Device according to one of Claims 1 to 10, **characterized in that** the device comprises a second oscillating-conveyor arrangement (6), which has at least one upper and one lower perforated plate (10a, 10b) for conveyance of the products (1) received from the feed device (3), wherein the upper and lower perforated plates (10a, 10b) are inclined downwards and are arranged in the form of a cascade in a successive manner in a product-conveyance path (T), and wherein the perforated plates (10a, 10b) each have a multiplicity of passage openings (12) for product breakage (2); and
wherein the device comprises at least one further upper and one further lower diversion device (20a, 20b), which are arranged below the passage openings (12) of the upper and lower perforated plate (10a, 10b), respectively, of the second oscillating-conveyor arrangement (6) and which serve for collecting and diverting the product breakage (2) passing through the passage openings (12),
wherein the upper perforated plate (10a) of the second oscillating-conveyor arrangement (6) defines an upper product-conveyance direction (P1) and the lower perforated plate (10b) of the second oscillating-conveyor arrangement (6) defines a lower product-conveyance direction (P2), which is different from the upper product-conveyance direction (P1), wherein at least one horizontal component (PH1) of the upper product-conveyance direction (P1) and one horizontal component (PH2) of the lower product-conveyance direction (P2) have different orientations.

12. Device according to Claim 11, **characterized in that** the store (40) has two store outlet openings (42), each being arranged adjacent to the receiving region (11) of the upper perforated plate (10a) of the first or second oscillating-conveyor arrangement (5, 6), wherein the two store outlet openings (42) are at substantially the same height.

13. Device according to Claim 12, **characterized in that** the store (40) is arranged between the two oscillating-conveyor arrangements (5, 6), wherein the two oscillating-conveyor arrangements (5, 6) are arranged symmetrically with respect to the store (40) .

14. Device according to one of Claims 11 to 13, **characterized in that** the device has a housing (50), which surrounds the two oscillating-conveyor arrangements (5, 6) and the store (40).

## Revendications

1. Dispositif de transfert de produits (1), comprenant :
un dispositif d'amenée (3) pour l'amenée des produits (1) ;
un agencement de transport vibratoire (5), qui présente au moins une plaque perforée supérieure et une plaque perforée inférieure (10a, 10b) pour le transport des produits (1) reçus par le dispositif d'amenée (3), les plaques perforées supérieure et inférieure (10a, 10b) étant inclinées vers le bas et agencées en cascade successivement dans un trajet de transport de produits (T), et les plaques perforées (10a, 10b) présentant chacune une pluralité d'ouvertures de passage (12) ; et
au moins un dispositif d'évacuation supérieur et un dispositif d'évacuation inférieur (20a, 20b), qui sont agencés sous les ouvertures de passage (12) de la plaque perforée supérieure et de la plaque perforée inférieure (10a, 10b), pour recueillir et évacuer les fragments de produits (2) passant par les ouvertures de passage (12),
la plaque perforée supérieure (10a) définissant une direction de transport de produits supérieure (P1) et la plaque perforée inférieure (10b) définissant une direction de transport de produits inférieure (P2) qui est différente de la direction de transport de produits supérieure (P1),
le dispositif d'amenée (3) comprenant un réservoir (40) pour stocker temporairement les produits (1), le réservoir (40) présentant une ouverture d'entrée de réservoir (41) et une ouverture de sortie de réservoir (42) pour décharger les produits (1), l'ouverture de sortie de réservoir (42) étant agencée de manière adjacente à une zone de réception (11) de la plaque perforée supérieure (10a),
**caractérisé en ce que**
le réservoir (40) comprend une plaque mobile (43) pour déplacer les produits (1), un capteur (44) pour détecter le niveau de remplissage du réservoir et une commande (45) pour commander la plaque mobile (43), la plaque mobile (43) étant adaptée de telle sorte qu'un mouvement de va-et-vient de la plaque mobile (43) provoque une sortie de produits (1) par l'ouverture de sortie de réservoir (42).

2. Dispositif selon la revendication 1, **caractérisé en ce qu'**au moins une composante horizontale (PH1) de la direction de transport de produits supérieure (P1) et une composante horizontale (PH2) de la direction de transport de produits inférieure (P2) sont orientées différemment.

3. Dispositif selon la revendication 2, **caractérisé en ce que** la composante horizontale (PH1) de la direction de transport de produits supérieure (P1) et la composante horizontale (PH2) de la direction de transport de produits inférieure (P2) sont orientées de manière essentiellement opposée.

4. Dispositif selon l'une quelconque des revendications précédentes, **caractérisé en ce que** le dispositif d'évacuation supérieur (20a) est incliné et définit une direction de transport de fragments de produits supérieure (B1), une composante horizontale (BH1) de la direction de transport de fragments de produits supérieure (B1) étant différente de la composante horizontale (PH1) de la direction de transport de produits supérieure (P1) de la plaque perforée supérieure (10a).

5. Dispositif selon la revendication 4, **caractérisé en ce que** la composante horizontale (BH1) de la direction de transport de fragments de produits supérieure (B1) et la composante horizontale (PH1) de la direction de transport de produits supérieure (P1) sont orientées transversalement l'une par rapport à l'autre.

6. Dispositif selon la revendication 4 ou 5, **caractérisé en ce que** le dispositif d'évacuation inférieur (20b) est incliné et définit une direction de transport de fragments de produits inférieure (B2), une composante horizontale (BH2) de la direction de transport de fragments de produits inférieure (B2) étant différente de la composante horizontale (PH2) de la direction de transport de produits inférieure (P2) de la plaque perforée inférieure (10b), les composantes horizontales (BH1, BH2) des directions de transport de fragments de produits supérieure et inférieure (B1, B2) étant orientées essentiellement dans le même sens.

7. Dispositif selon l'une quelconque des revendications précédentes, **caractérisé en ce que** l'agencement de transport vibratoire (5) comprend au moins un puits (30) avec une ouverture d'entrée de puits (31) et une ouverture de sortie de puits (32), les au moins une plaque perforée supérieure et inférieure (10a, 10b) et les au moins un dispositif d'évacuation supérieur et inférieur (20a, 20b) étant agencés à l'intérieur de l'au moins un puits (30) et entre l'ouverture d'entrée de puits (31) et l'ouverture de sortie de puits (32).

8. Dispositif selon l'une quelconque des revendications précédentes, **caractérisé en ce que** l'agencement de transport vibratoire (5) comprend plusieurs paires de plaques perforées (10a, 10b), chacune étant formée d'une plaque perforée supérieure et d'une plaque perforée inférieure (10a, 10b), et **en ce que** le dispositif comprend plusieurs paires de dispositifs d'évacuation (20a, 20b), chacune étant formée d'un dispositif d'évacuation supérieur et d'un dispositif d'évacuation inférieur (20a, 20b), les plusieurs paires de plaques perforées (10a, 10b) étant agencées les unes en dessous des autres.

9. Dispositif selon la revendication 8, **caractérisé en ce que** les plaques perforées (10a, 10b) sont agencées en zigzag.

10. Dispositif selon la revendication 1, **caractérisé en ce que** la plaque mobile (43) soutient par le bas les produits (1) dans le réservoir (40).

11. Dispositif selon l'une quelconque des revendications 1 à 10, **caractérisé en ce que** le dispositif comprend un deuxième agencement de transport vibratoire (6) qui présente au moins une plaque perforée supérieure et une plaque perforée inférieure (10a, 10b) pour le transport des produits (1) reçus par le dispositif d'amenée (3), les plaques perforées supérieure et inférieure (10a, 10b) étant inclinées vers le bas et étant agencées en cascade successivement dans un trajet de transport de produits (T), et les plaques perforées (10a, 10b) présentant chacune une pluralité d'ouvertures de passage (12) pour les fragments de produits (2) ; et le dispositif comprenant au moins un autre dispositif d'évacuation supérieur et un autre dispositif d'évacuation inférieur (20a, 20b), qui sont agencés sous les ouvertures de passage (12) de la plaque supérieure et de la plaque inférieure (10a, 10b) du deuxième agencement de transporteur vibratoire (6), pour recueillir et évacuer les fragments de produits (2) passant par les ouvertures de passage (12),
la plaque perforée supérieure (10a) du deuxième agencement de transport vibratoire (6) définissant une direction de transport de produits supérieure (P1) et la plaque perforée inférieure (10b) du deuxième agencement de transport vibratoire (6) définissant une direction de transport de produits inférieure (P2), qui est différente de la direction de transport de produits supérieure (P1), au moins une composante horizontale (PH1) de la direction de transport de produits supérieure (P1) et une composante horizontale (PH2) de la direction de transport de produits inférieure (P2) étant orientées différemment.

12. Dispositif selon la revendication 11, **caractérisé en ce que** le réservoir (40) présente deux ouvertures de sortie de réservoir (42), qui sont agencées respectivement de manière adjacente à la zone de réception (11) de la plaque perforée supérieure (10a) du premier et du deuxième agencement de transport vibratoire (5, 6), les deux ouvertures de sortie de réservoir (42) étant agencées essentiellement à la même hauteur.

13. Dispositif selon la revendication 12, **caractérisé en ce que** le réservoir (40) est agencé entre les deux agencements de transport vibratoires (5, 6), les deux agencements de transport vibratoires (5, 6) étant agencés symétriquement par rapport au réservoir (40).

14. Dispositif selon l'une quelconque des revendications 11 à 13, **caractérisé en ce que** le dispositif présente un boîtier (50) qui entoure les agencements de transport vibratoires (5, 6) et le réservoir (40).
